# EUROPÄISCHE PATENTSCHRIFT

(11) **EP 3 300 936 B1**
(45) Veröffentlichungstag und Bekanntmachung des Hinweises auf die Patenterteilung: **04.12.2019**
(21) Anmeldenummer: 17193354.2
(22) Anmeldetag: 27.09.2017
(51) Int. Cl.: B60K 11/04, F28F 9/00

(54) **LAGER FÜR EIN BAUTEIL EINES KRAFTFAHRZEUGS**
BEARING FOR A COMPONENT OF A MOTOR VEHICLE
COUSSINET POUR UN COMPOSANT D'UN VÉHICULE AUTOMOBILE

(30) Priorität: 28.09.2016 DE 102016118315
(43) Veröffentlichungstag der Anmeldung: 04.04.2018
(73) Patentinhaber: VORWERK AUTOTEC GmbH & Co. KG, 42287 Wuppertal (DE)
(72) Erfinder: Frenk, Jakob, 44269 Dortmund (DE)
(74) Vertreter: Lippert Stachow Patentanwälte Rechtsanwälte

(56) Entgegenhaltungen:
- EP-A2- 1 106 413
- FR-A1- 2 998 222
- KR-A- 20160 072 537
- US-A1- 2007 251 669

## Beschreibung

Die Erfindung betrifft ein Lager für ein Bauteil eines Kraftfahrzeuges, wobei es sich bei dem zu lagernden Bauteil insbesondere, wenn auch nicht ausschließlich, um einen Kühler handeln kann.

Aus DE 20 2004 011 632 U1 ist eine Befestigungsvorrichtung mit einem wenigstens teilweise aus elastischem Material bestehenden Lager bekannt, welches mit der Karosserie des Kraftfahrzeuges verbunden ist und einen Kühler unterseitig abstützt, welcher so gelagert ist, dass er im Falle einer Kraftbeaufschlagung, wie sie z.B. bei einem Frontalaufprall auftritt, in Richtung der Krafteinwirkung bewegbar ist. Das Lager weist einen Sitz auf, in welchem bei in der Einbauposition befindlichem Kühler ein mit diesem verbundenen Halteelement aufnehmbar ist, wobei die Wandung des Sitzes in dem Bereich, der durch die bei Krafteinwirkung erfolgende Bewegung des Kühlers beaufschlagt wird, mit einer Soll-Durchbruchstelle und der Sitz an der die Soll-Durchbruchstelle aufweisenden Seite mit einer Verlängerung versehen ist, die eine als Langloch ausgebildete Ausnehmung aufweist. Diese Ausgestaltung gibt die Möglichkeit, dass der Kühler während eines Frontalaufpralls mit niedrigerer Geschwindigkeit bei Überschreiten eines vorherbestimmten Grenzwertes der einwirkenden Kraft nach hinten im Wesentlichen in Längsrichtung des Fahrzeugs ausweichen kann, ohne eine erhebliche Beschädigung zu erfahren. Bei dieser Ausweichbewegung wird die Soll-Durchbruchstelle des Sitzes geöffnet, um den Durchgang des dem Kühler zugeordneten zapfenartigen Halteelementes in das an den Sitz anschließende Langloch zu ermöglichen.

An dieser Ausgestaltung hat es sich als nachteilig herausgestellt, dass nach der durch einen Aufprall bewirkten Verschiebung des zapfenförmigen Halteelementes durch die Durchbruchstelle des Sitzes die weitere Bewegung des Zapfens völlig unkontrolliert erfolgt und eine Fixierung desselben in dem Bereich zwischen Sitz und dem dem Sitz abkehrten Ende des Langloches nicht vorgesehen ist. Es ist somit nicht möglich, nachträglich das Ausmaß der durch einen Aufprall oder dergleichen bewirkten Ausweichbewegung festzustellen und/oder brauchbare Rückschlüsse auf die Größe der zur Einwirkung gekommenen Kraft zu ziehen.

Bei verbesserten Ausgestaltungen eines solchen Lagers ist vorgesehen, einander gegenüber liegende Bereiche der Begrenzungswandung der Ausnehmung des mit der Karosserie verbindbaren Lagers in einem Abstand voneinander anzuordnen, der kleiner ist als die entsprechende Abmessung des von dem Sitz aufgenommenen Halteelementes des Bauteils, wobei mindestens Bereiche beider Begrenzungswandungen elastisch verformbar gestaltet sind. Eine solche verbesserte, gattungsgemäße Ausführungsform ist beispielsweise in der Offenlegungsschrift EP 1 106 413 A2 offenbart. Auch das Dokument US 2007/251669 A1 offenbart ein gattungsgemäßes Lager. In der beschriebenen Ausführungsform weist dieses Lager aus gummielastischem Material zwei Sitze für die Aufnahme eines mit dem Kühler verbundenen Halteelements auf, wobei beide Sitze durch ein in Richtung einer möglichen Krafteinwirkung verlaufendes Langloch verbunden sind, dessen einander gegenüber liegende Begrenzungswandungen einen Abstand voneinander aufweisen, der kleiner ist als die entsprechende Abmessung des von dem Sitz aufgenommenen Halteelements. In ähnlicher Weise offenbart das Dokument KR 2016 0072537 A ein aus elastischem Material bestehendes Lager für den Kühler eines Kraftfahrzeuges mit zwei Sitzen, die durch eine in Richtung einer wahrscheinlichen Kraftbeaufschlagung verlaufenden Ausnehmung miteinander verbunden sind. Einander gegenüber liegende Begrenzungswandungen der Ausnehmung weisen dabei einen Abstand auf, der kleiner ist als die entsprechende Abmessung des vom Lager aufzunehmenden Halteelements.

Der Erfindung liegt die Aufgabe zugrunde, ein Lager der einleitend beschriebenen Art so zu modifizieren, dass das vorzugsweise zapfen- oder stiftförmige Halteelement nach dem Verlassen des Sitzes im Langloch bezüglich seiner Bewegbarkeit einer verbesserten Einschränkung unterliegt, insbesondere dahingehend, dass die Bewegungsenergie des Bauteils abgebaut und seine Geschwindigkeit kontrolliert reduziert wird, um so die Bewegung möglichst stoßfrei zu beenden, auch mit dem Ziel, dass die Halterung und damit das Kühlermodul oder ein anderes Bauteil nach Beendigung der von außen einwirkenden Kräfte nicht frei innerhalb des Langloches bewegbar ist, sondern eine definierbare Position einnimmt.

Zur Lösung dieser Aufgabe schlägt die Erfindung vor, dass einander gegenüberliegende Wandbereiche der Ausnehmung wenigstens teilweise von lamellenartigen Vorsprüngen gebildet sind und die lamellenartigen Vorsprünge beider Wandbereiche einander entgegen gerichtet und so bemessen sind, dass der Abstand der freien Enden zweier zusammen wirkender und einander entgegen gerichteten Lamellen beider Wandbereiche kleiner ist als die entsprechende Abmessung des Halteelementes des Bauteils, also beispielsweise des Zapfens, der über seine Länge unterschiedliche Querabmessungen aufweisen kann, und dass die Lamellen beider Wandbereiche in Längsrichtung des Langloches gegeneinander versetzt angeordnet sind. Dadurch wird verstärkt erreicht, dass die Bewegung des Halteelements innerhalb des Langloches im Wesentlichen in Längsrichtung desselben und damit auch die Bewegung des Kühlers oder eines anderen entsprechend gelagerten Bauteils durch die zusammenwirkenden elastischen Bereiche beider einander gegenüberliegenden Wandungen verlangsamt und das Halteelement nach Beendigung der äußeren Krafteinwirkung in seiner Lage festgehalten wird, sodass nachträglich feststellbar ist, um welchen Weg das Bauteil durch die Einwirkung äußerer Kräfte verschoben wurde.

Durch die versetzte Anordnung der Lamellen beider Wandbereiche in Längsrichtung des Langlochs, aber auch durch andere Maßnahmen wie beispielsweise Abmessungen der Lamellen, Größe der Abstände zwischen diesen in Verschieberichtung des Halteelementes und Verformungseigenschaften des die Lamellen bildenden gummielastischen Werkstoffes, kann die Verschiebbarkeit des Halteelementes innerhalb der Ausnehmung des Lagers, in Abhängigkeit von der Größe der jeweils einwirkenden Kraft, beeinflusst werden.

Die einander gegenüberliegenden Wandbereiche des Langlochs können z. B. auch sägezahnartig ausgebildet sein.

Die Soll-Durchbruchstelle ist vorteilhafterweise als durchgehender Schlitz in der Wandung des Sitzes ausgebildet, der bei einem kreisrunden Sitz sich radial durch die Wandung des Sitzes und parallel zur Längsrichtung der daran anschließenden Ausnehmung verlaufen kann. Sie kann aber auch in anderer Weise ausgebildet sein, z. B. als Zone geringerer Dicke der Wandung des Sitzes.

Das Halteelement kann einen verdickten Endabschnitt aufweisen, welcher die untere Begrenzungsfläche des Lagers untergreift.

Sitz und/oder Verlängerung des vorzugsweise einstückigen Lagers können mit wenigstens einer verstärkenden Einlage versehen sein, welche eine geringere Elastizität aufweist als der Sitz und/oder die Verlängerung. Auch durch die Anbringung solcher verstärkenden Einlagen sind die Verformungseigenschaften des das Lager bildenden Elastomers oder eines anderen elastischen Werkstoffes beeinflussbar.

Gemäß einem weiteren Vorschlag der Erfindung kann das Lager mit einer den das Langloch aufweisenden Bereich oberseitig abdeckenden Auflage versehen sein, die derart ausgebildet und angebracht ist, dass sie eine Bewegung des Halteelementes und damit des zu lagernden Bauteils nicht merklich behindert. Diese Ausgestaltung trägt der Tatsache Rechnung, dass das zu lagernde Bauteil am Band häufig ohne visuelle Kontrolle eingebaut wird, sodass nicht feststellbar ist, ob das Bauteil, beispielsweise der Kühler, richtig montiert ist. Die erfindungsgemäße Abdeckung stellt sicher, dass das z. B. zapfenförmige Halteelement nicht im Bereich des Langloches bzw. Lamellen eingesteckt wird. Die Abdeckung kann in leichter Bauweise hergestellt und so am Lager angebracht sein, dass sie einerseits beim Transport und während der Montage nicht durch äußere Einwirkungen verschoben wird, andererseits jedoch im Falle eines Aufpralls oder dergleichen die dadurch bewirkte Bewegung des Bauteils nicht merklich behindert. Auch die ein falsches Einsetzen des Halteelementes in das Lager verhindernde Abdeckung wird somit im Fall eines Aufpralls eine Änderung ihrer Position erfahren, so dass auch dadurch eine Verschiebung des Bauteils aus seiner Einbaulage sofort sichtbar wird. Die Abdeckung kann aus einem Hartkunstoff, z. B. Polyamid gefertigt sein.

Das Karosserieteil, mit welchem das Lager verbunden ist, kann mit wenigstens einer Aufnahme für das Lager versehen sein, welches außenseitig eine Hinterschneidung aufweist, in welche in der Einbaulage der Teile Randbereiche der Aufnahme eingreifen. Das Lager kann mit der gegebenenfalls vormontierten Abdeckung in die Aufnahme eingedrückt werden.

Das Karosserieteil, mit welchem das Lager verbunden ist, kann als Querträger ausgebildet sein.

Das zu lagernde Bauteil kann auch in seinem oberen Bereich mit wenigstens einem Halteelement versehen sein, dem ein Lager gemäß der Erfindung zugeordnet ist.

Wenngleich die Erfindung insbesondere zur Lagerung des Kühlers eines Kraftfahrzeuges geeignet ist, ist sie auch zur Lagerung anderer Bauteile verwendbar.

Schließlich betrifft die Erfindung ein Kraftfahrzeug mit mindestens einem Lager der vorstehend beschriebenen Art zur Befestigung eines Bauteils an der Karosserie eines Kraftfahrzeuges.

In der Zeichnung sind Ausführungsbeispiele der Erfindung dargestellt. Es zeigen
- Figur 1: im Schema eine Anordnung mit einem in Einbauposition befindlichen Kühler, einem Querträger und zwei Lagern in perspektivischer Ansicht,
- Figur 2: eine der Figur 1 entsprechende Darstellung mit dem Kühler in einer gegenüber der Einbauposition beidseitig verschobenen beziehungsweise verschwenkten Position,
- Figur 3: eine Seitenansicht der Anordnung gemäß Figur 1,
- Figur 4: eine Seitenansicht der Anordnung gemäß Figur 4,
- Figur 5: die perspektivische Ansicht eines Lagers von oben,
- Figur 6: eine Draufsicht des Lagers gemäß Figur 5,
- Figur 7: eine Ansicht des Lagers gemäß Figuren 5 und 6 von unten,
- Figur 8: einen Längsschnitt durch ein Lager gemäß den Figuren 5 bis 7, jedoch mit einer zusätzlichen Verstärkungseinlage,
- Figur 9: eine der Figur 8 entsprechende Darstellung einer zweiten Ausführungsform eines Lagers,
- Figur 10: die Draufsicht einer dritten Ausführungsform,
- Figur 11: eine perspektivische Ansicht eines Lager und einer zugeordneten Abdeckung vor dem Zusammenfügen beider Teile,
- Figur 12: eine der Figur 11 entsprechende Ansicht von Lager und Abdeckung in zusammengefügtem Zustand und
- Figur 13: eine der Figur 3 entsprechende Darstellung mit der Anordnung gemäß Figur 12, allerdings in perspektivischer Ansicht und in größerem Maßstab.

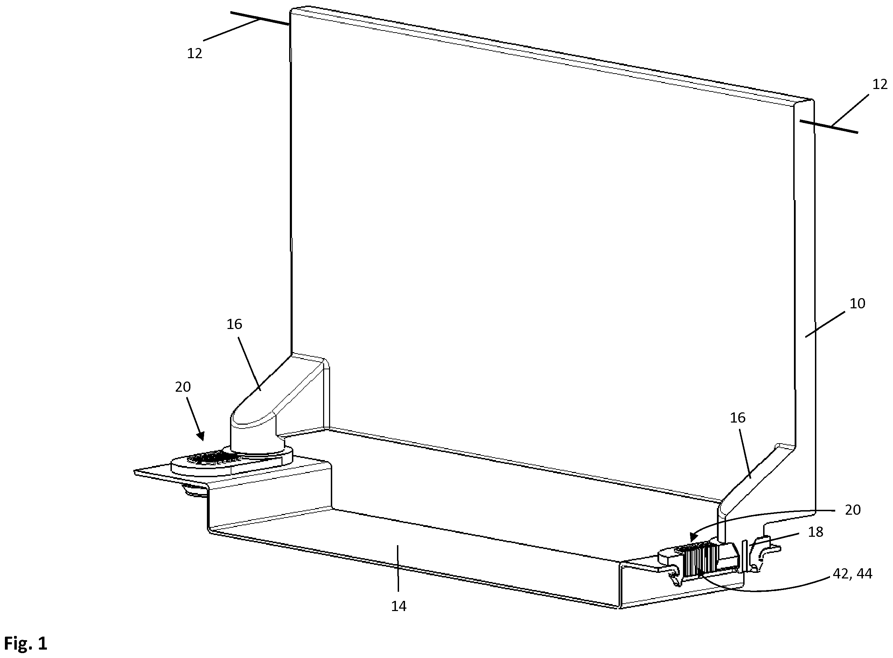

Die in den Figuren 1 bis 4 dargestellte Anordnung dient zur Lagerung eines Kühlers 10, welcher durch zwei in seinem oberen Bereich seitlich angebrachte Halteelemente 12, die als Stift, Zapfen oder dergleichen ausgebildet sein können, um eine im Wesentlichen horizontale Achse schwenkbar an der Karosserie angebracht ist. Unterseitig ist der Kühler 10 durch einen Querträger 14 abgestützt. Dazu ist der Kühler 10 an seinem unteren Bereich an der rückseitig mit zwei Auskragungen 16 versehen, die unterseitig als Halteelement jeweils einen zapfenartigen Vorsprung 18 aufweisen. Jedem Zapfen 18 ist ein Lager 20 zugeordnet, welches oberseitig an dem Querträger 14 angebracht ist.

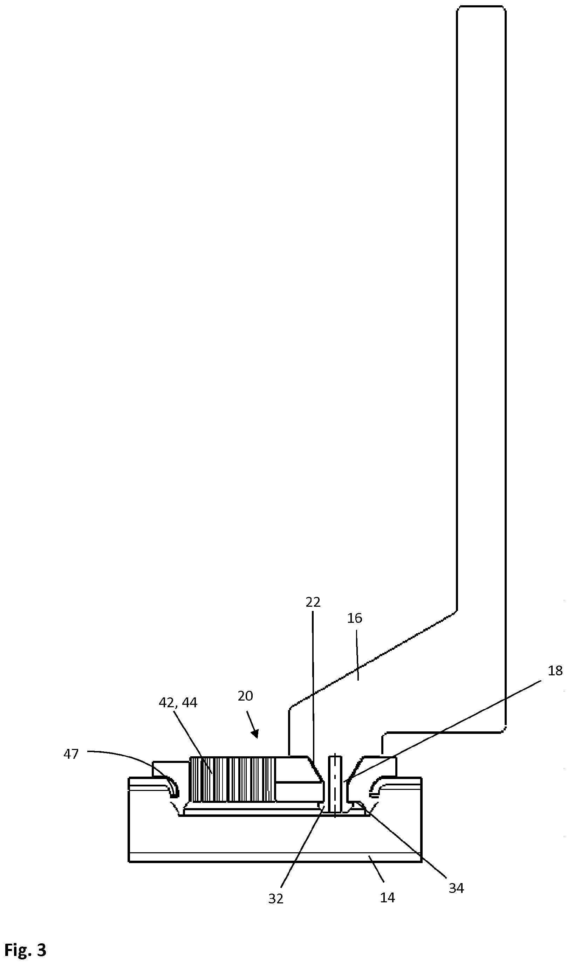

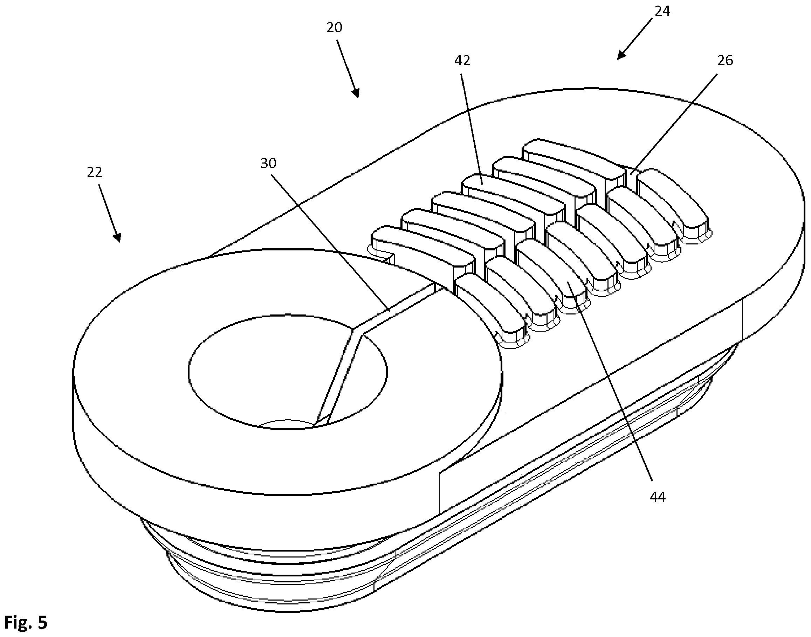

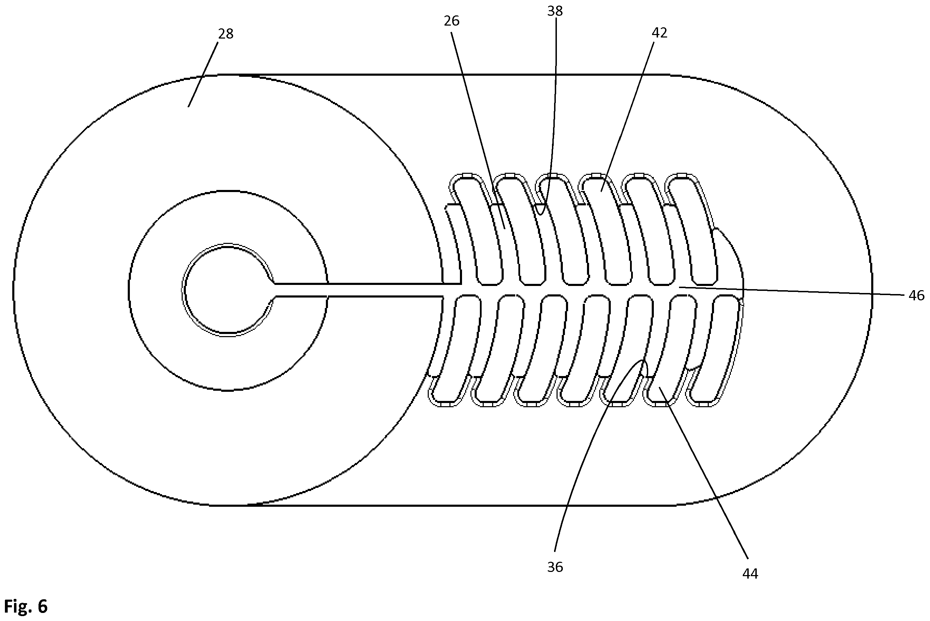

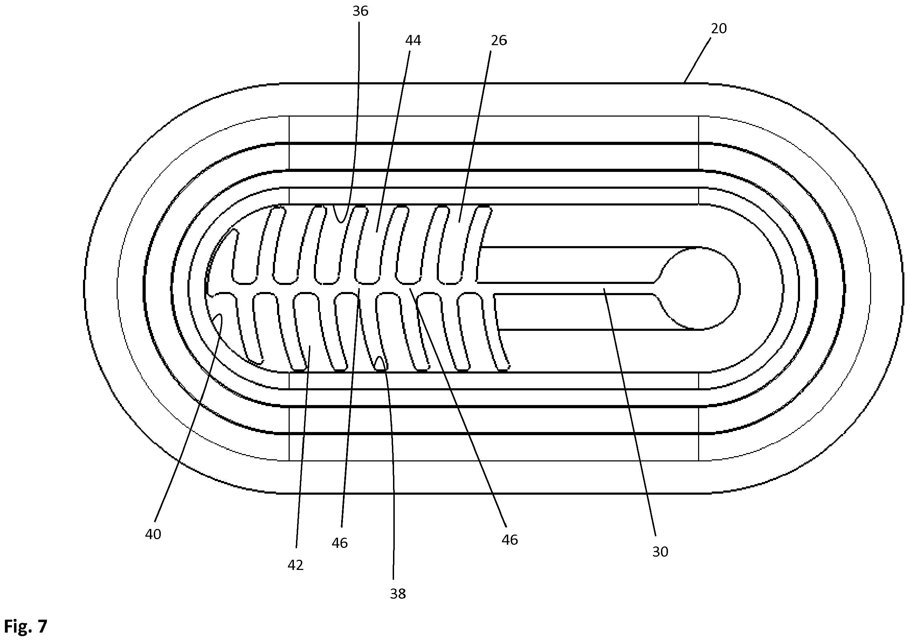

Im Folgenden wird die grundsätzliche Ausgestaltung des Lagers 20 unter Bezugnahme auf die Figuren 5 bis 8 erläutert. Das aus gummielastischem Material bestehende Lager 20 weist einen ersten Bereich 22 und einen zweiten Bereich 24 auf, von denen der erste Bereich 22 als Sitz für einen der am Kühler 10 angebrachten, als zapfenartigen Vorsprünge 18 ausgebildete Halteelemente dient, wenn der Kühler in der Baugruppe seine normale in den Figuren 1 und 3 dargestellte Einbauposition einnimmt. Der zweite Bereich 24 des Lagers stellt eine seitliche Verlängerung des Sitzes 22 dar, dessen Breite dem größten Durchmesser des Sitzes entsprechen kann, ohne dass dies ein unbedingtes Erfordernis ist. Die Verlängerung 24 ist mit einem Langloch 26 versehen, welches seitlich an einen die über ihren Umfang gleichmäßige Sitzwandung 28 radial durchsetzenden Schlitz 30 anschließt, welcher eine Soll-Durchbruchstelle der Sitzwandung 28 bildet.

Der Sitz 22 ist entsprechend der Gestalt des zapfenartigen Vorsprungs 18 von oben nach unten sich verengend konisch ausgebildet und am unteren Ende offen, sodass der zapfenartige Vorsprung 18 mit seinem einen größeren Durchmesser aufweisenden Endabschnitt 32 die untere Begrenzungsfläche 34 des Sitzes - und gegebenenfalls die des übrigen Lagerbereichs - untergreifen kann, wie dies in den Figuren 1 und 3 erkennbar ist.

Die seitlichen Begrenzungswände 36, 38 des Langloches 26 verlaufen ausgehend vom Sitz 22 parallel zueinander, um an dem Sitz abgekehrten Ende des Langloches durch einen etwa halbkreisförmigen Wandabschnitt 40 miteinander verbunden zu sein. Von den beiden seitlichen Begrenzungswänden erstrecken sich lamellenartige Vorsprünge 42, 44 in Richtung auf die jeweils gegenüberliegende Begrenzungswand 36 bzw. 38, wobei die Lamellen derartig dimensioniert sind, dass der zwischen den freien Enden der Lamellen beider seitlichen Begrenzungswände 36, 38 jeweils befindliche Durchgang 46 schmaler ist als zumindest der Abschnitt des zapfenartigen Vorsprungs 18 mit dem kleinsten Durchmesser, und der Vorsprung der Form des Sitzes 22 im Lager 20 angepasst ist. Bei dem in der Zeichnung dargestellten Ausführungsbeispiel sind Sitz und zapfenförmiger Vorsprung im Querschnitt kreisrund und im oberen Bereich 39 konisch ausgebildet. Es sind jedoch auch andere Querschnittsformen, beispielsweise rechteckige, insbesondere quadratische Querschnittsformen denkbar.

Ferner sind bei dem in der Zeichnung dargestellten Ausführungsbeispiel die lamellenartigen Vorsprünge 42, 44 in Längsrichtung des Langlochs 26 gegeneinander versetzt angeordnet, sodass die Lamelle der einen seitlichen Begrenzungswand dem Zwischenraum zwischen zwei Lamellen der jeweils andern Begrenzungswand gegenüberliegt. Unabhängig von der konkreten Gestaltung des Lagers sollte die Bewegung des Vorsprungs 18 ohne die Verformung von Bereichen der Begrenzungen des Langlochs ausgeschlossen sein.

Beide einstückigen Lager 20 sind so angeordnet, dass der Schlitz 30 und das daran anschließende Langloch 26 im Wesentlichen in Längsrichtung und damit in der normalen Fahrtrichtung des Kraftfahrzeuges verlaufen. Dies gilt auch für den Durchgang 46, welcher durch die freien Enden der einander entgegen gerichteten Lamellen 42, 44 gebildet bzw. begrenzt wird, ohne dass dieser linear verlaufen muss.

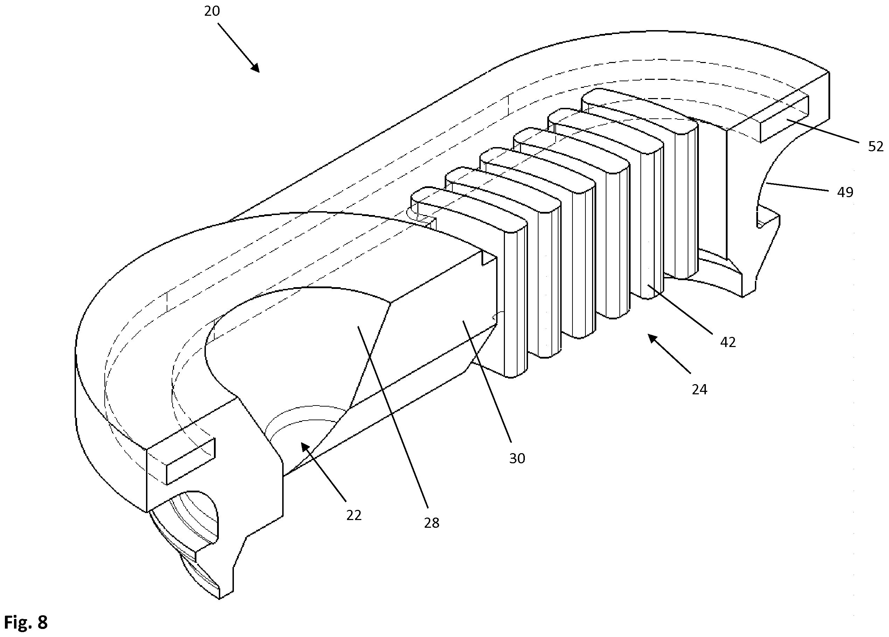

Der Querträger 14 ist an seinen beiden Enden mit einer Aufnahme 45 für ein Lager 20 versehen, die am Querträger mittels Schweißen oder in anderer Weise befestigt ist. Die Aufnahme 45 weist eine an die Form des Lagers angepasste Ausnehmung auf, deren entsprechend abgebogener Rand 47 in eine Hinterschneidung 49 (Fig. 8) des Lagers zur Fixierung desselben eingreift.

Im Falle einer beispielsweise durch einen Aufprall verursachten Krafteinwirkung, die einen bestimmten Grenzwert überschreitet, führt der Kühler eine um die durch die ersten Halteelemente 12 definierte Achse eine Schwenkbewegung aus, die zu einer Beaufschlagung der Wandung des Sitzes 22 im Bereich des Schlitzes 30 führt mit dem Ergebnis, dass die den Schlitz begrenzenden Wandbereiche des Sitzes durch den zapfenartigen Vorsprung auseinander bewegt werden und der zapfenartige Vorsprung aus dem Sitz in den Bereich des Langloches 26 und damit den der Lamellen verschoben wird.

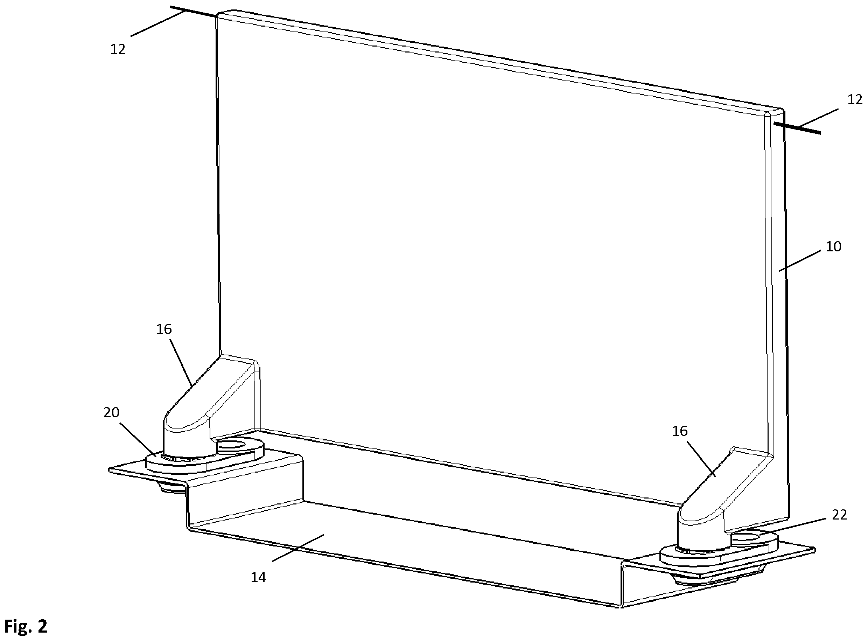

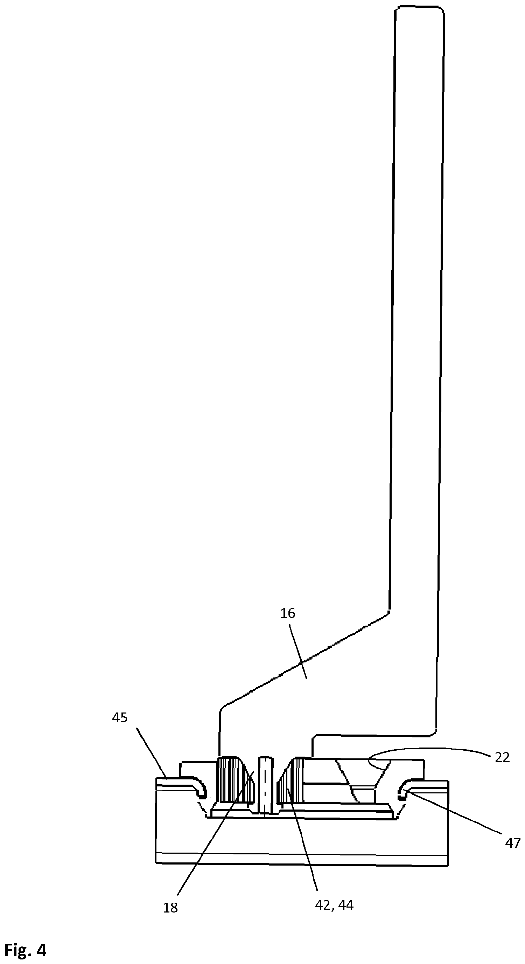

Die Figuren 2 und 4 zeigen den Kühler 10 und die von ihm getragenen zapfenartigen Vorsprünge 18 in einer gegenüber der Einbauposition veränderten zweiten Position, wie sie durch einen Aufprall verursacht sein kann, in welcher die zapfenartigen Vorsprünge 18 auf beiden Seiten des Kühlers 10 sich im Bereich des Langloches 26 befinden. Insbesondere die Figur 4 lässt erkennen, dass jeder zapfenartige Vorsprung 18 sich gegenüber dem Sitz 22 verschoben in dem Bereich des Langloches 26 mit den darin befindlichen lamellenartigen Vorsprüngen befindet und von diesen so gehalten ist, dass ohne weitere Krafteinwirkung ein Verschiebung des Zapfens und damit des Kühlers 10 nicht erfolgen kann. Unter der Einwirkung der durch den Aufprall verursachten Bewegung des Kühlers 10 und damit der Zapfen im Bereich des Langloches 26 werden die Lamellen verformt und verschoben, wodurch zwangsläufig bei der hier zu unterstellenden verhältnismäßig geringen Krafteinwirkung es zu einer Verlangsamung der Bewegung des Kühlers 10 mit den Zapfen bis zu einem vollständigen Stillstand kommt, wobei der Kühler 10 dann in der beim Stillstand erreichten Position durch die Lamellen in dieser Position, wie sie beispielsweise in Figur 4 dargestellt ist, gehalten wird. Auch hier besteht die Möglichkeit, dass der Endabschnitt 32 des Vorsprungs 18 die Lamellen 42, 44 untergreift, um so während der Bewegung eine zusätzliche Führung des Vorsprungs 18 und damit des Kühlers oder dergleichen zu bewirken.

Da die Beschaffenheit des Lagers bezüglich der Elastizität des verwendeten gummielastischen Materials und der Ausgestaltung desselben z.B. hinsichtlich der Anordnung und Dimensionierung der Lamellen bekannt ist und somit seine Verformungseigenschaften bestimmbar sind, besteht die Möglichkeit, anhand beispielsweise des Ausmaßes der Verschiebung, wie sie beispielsweise in Figur 4 dargestellt ist, die für die Beurteilung des Sachverhaltes erforderlichen Rückschlüsse zu ziehen, beispielsweise bezüglich des Ausmaßes einer möglichen Beschädigung des Kühlers durch einen Aufprall.

Das in Figur 8 der Zeichnung dargestellte Lager 20 ist mit einer zusätzlichen umlaufenden Verstärkungseinlage 52 versehen, die ebenfalls die Verformbarkeit in berechenbarer Weise beeinflusst.

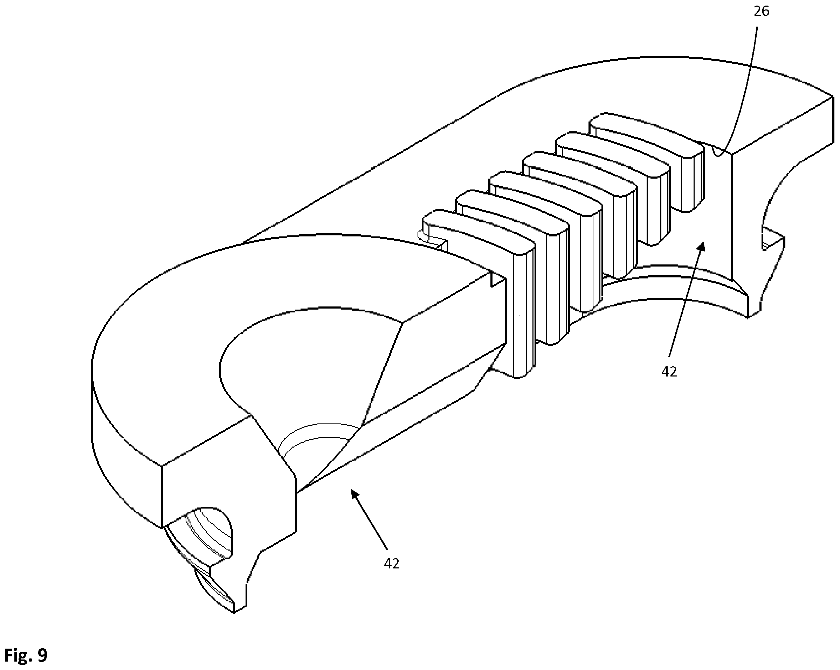

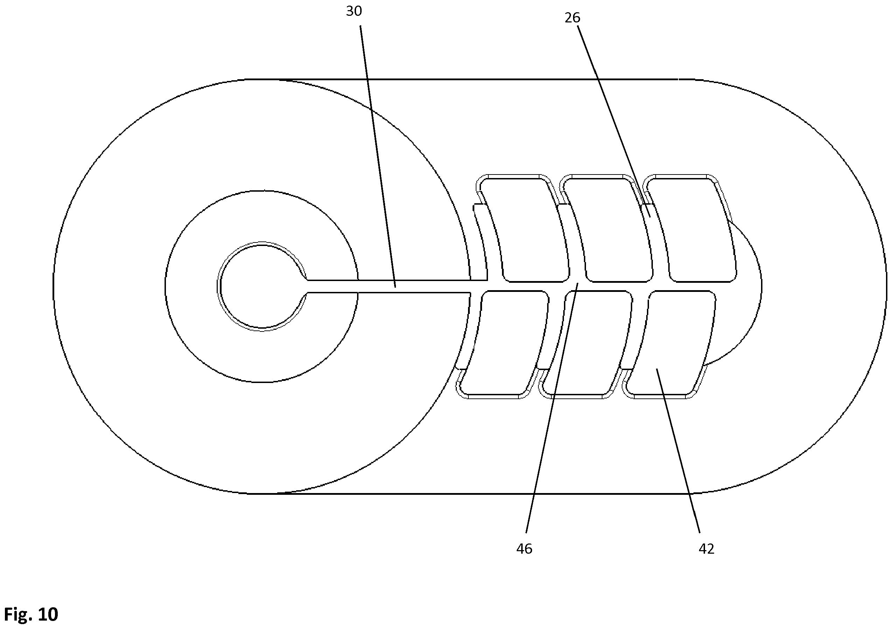

Die Ausführungsformen gemäß den Figuren 9 und 10 weisen ebenfalls den Grundaufbau des Lagers 20 der Figuren 5 bis 7 auf. Figur 8 zeigt eine weitere Möglichkeit der Beeinflussbarkeit der Verformbarkeit des Lagers durch entsprechende Gestaltung der Lamellen 42, die in dem dem Sitz 22 abgekehrten Bereich des Langlochs 26 kürzer sind als in dem an den Sitz anschließenden Bereich. Figur 10 zeigt ein Lager, dessen Lamellen 42 in Längsrichtung des Langlochs 26 bzw. des Schlitzes 30 breiter bemessen sind als die Lamellen der anderen Ausführungsbeispiele, wobei die Anzahl der Lamellen kleiner ist. Es sind natürlich auch Ausführungen möglich, die Lamellen unterschiedlicher Breite oder auf andere Weise unterschiedlich dimensionierte Lamellen aufweisen. Ferner kann an dem dem Sitz 22 abgekehrten Ende des Langlochs 26 ein Freiraum 54 für den Vorsprung 18 vorgesehen sein, der so dimensioniert ist, dass eine Bewegung des Vorsprungs 18 und damit des Bauteils 10 in Richtung auf den Sitz 22 verhindert wird.

Dem in den Figuren 1 bis 4 der Zeichnung dargestellten Ausführungsbeispiel liegt die Annahme zugrunde, dass der Aufprall auf den Kühler 10 einigermaßen symmetrisch erfolgte, sodass die Lager 20 an beiden Seiten etwa in gleicher Weise beaufschlagt wurden. Dies ist jedoch nicht Voraussetzung für die Anwendbarkeit der Lehre gemäß der Erfindung. Auch bei nicht symmetrischer Krafteinwirkung auf den Kühler 10, die zur Folgen haben könnte, dass die Lager 20 zu beiden Seiten des Kühlers 10 ungleich beansprucht würden und Letzterer nur einseitig oder ungleichmäßig verschoben würde, bliebe die Anzeigefunktion der erfinderischen Ausgestaltung erhalten.

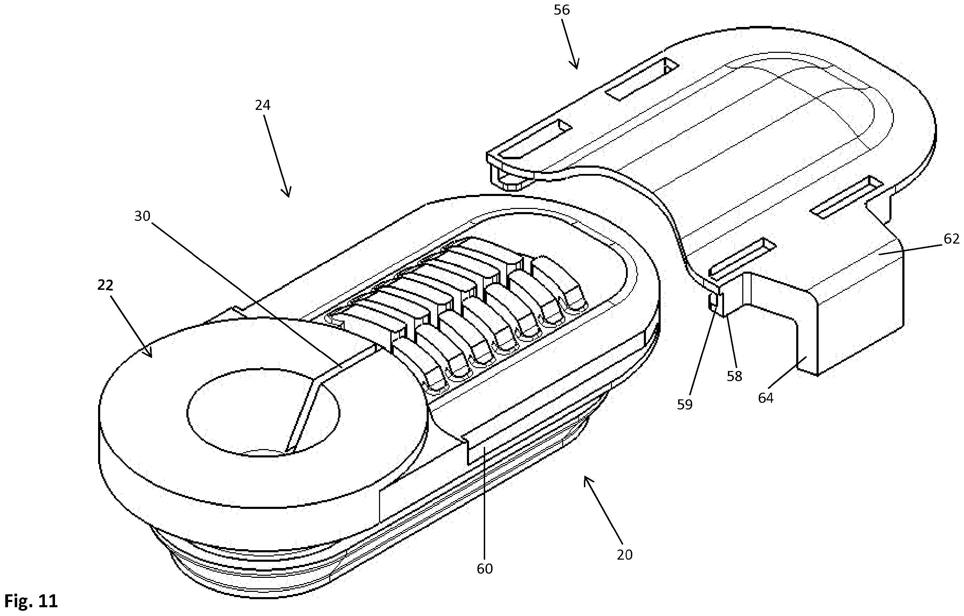

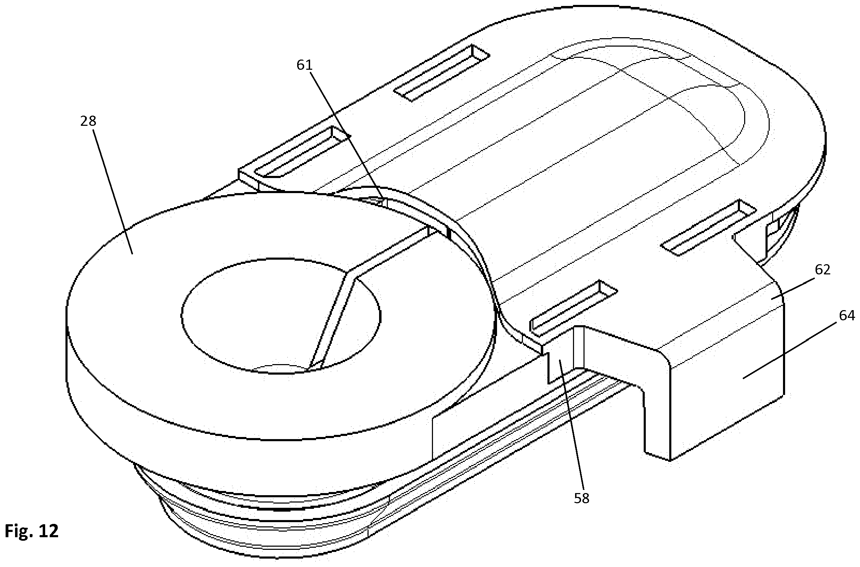

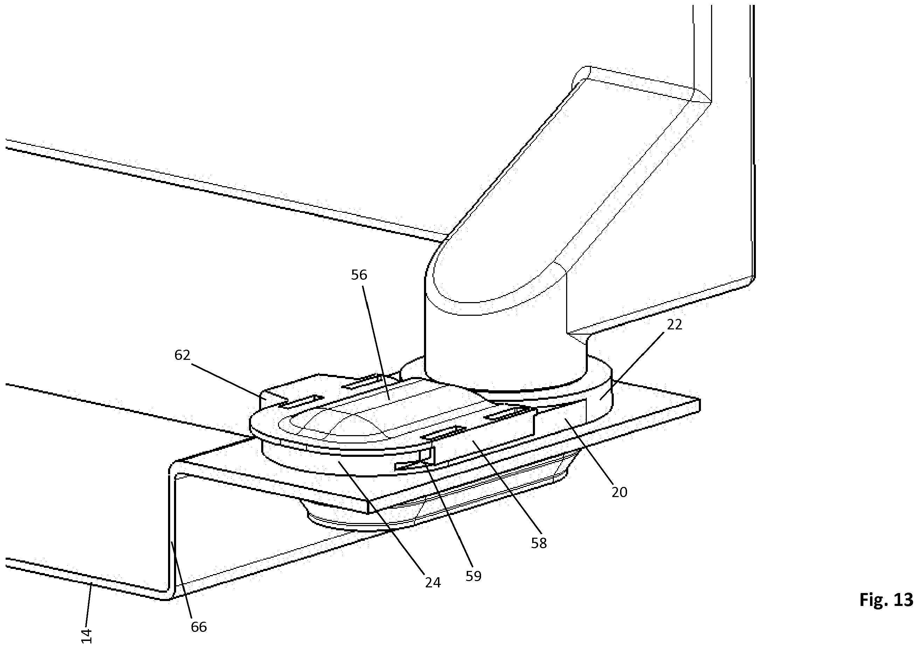

Das in den Figuren 11 bis 13 dargestellte Ausführungsbeispiel zeigt ein Lager 20, welches zusätzlich mit eine Abdeckung 56 versehen ist, welche auf dem zweiten Bereich 24 aufgesetzt ist und das in diesem enthaltenen Langloch 26 oberseitig so weit verschließt, dass dieser Lagerbereich nicht zugänglich und somit ein irrtümliches Einsetzen des auch hier zapfenförmigen Halteelements ausgeschlossen ist. Insbesondere Figur 11 lässt erkennen, dass die Abdeckung 56 an jeder Seite mit jeweils einem abgewinkelten leistenförmigen Fortsatz 58 versehen ist, dessen freier Schenkel 59 in montiertem Zustand der Abdeckung in eine nutförmige Ausnehmung 60 des Lagers 20 eingreift. Dabei ist die Anordnung so getroffen, dass die Abdeckung 56 aus der in Figur 11 dargestellten Position in Längsrichtung des Langloches auf den letzteres enthaltenen Lagerbereich 24 aufschiebbar ist, wobei die seitlichen nutförmigen Ausnehmungen 60 als Führung dienen. Die Abdeckung wird durch den Reibungswiderstand in der Führung in der Einbaulage gehalten, in welcher der stirnseitige Rand 61 der Abdeckung an der Sitzwandung 28 anliegen kann. Die Abdeckung ist so ausgeführt, dass sie ein im Verlauf eines Montagevorgangs erfolgendes Aufsetzen des zapfenartigen Vorsprungs oder eines anderen Halteelementes ohne Beschädigung übersteht. Da das Halteelement von oben in den Bereich des Lagers abgesenkt wird, wirken dabei keine oder nur vernachlässigbare Kraftkomponenten auf die Abdeckung ein , welche zu einer Verschiebung der Abdeckung führen könnten. Es kann zweckmäßig sein, die Abdeckung 56 mit einem seitlichen rechtwinkligen Vorsprung 62 zu versehen, dessen freier Schenkel 64 in dem in Figur 13 dargestellten montierten Zustand an einem vertikalen Abschnitt 66 des Querträgers 14 anliegt, um so eine zusätzliche Führung und Stabilisierung der Anordnung zu erreichen.

Bei den in der Zeichnung dargestellten Ausführungsbeispielen erfährt der Kühler 10 im Fall eines Aufpralls die bereits erwähnte Schwenkbewegung, die jedoch in der Zeichnung nicht besonders berücksichtigt ist, da das Ausmaß der Positionsänderung der zapfenartigen Vorsprünge 18 in der Vertikalen aufgrund des verhältnismäßig großen Radius und der kurzen Wegstrecken, um welche die Verschwenkung erfolgt, vernachlässigbar ist.

Die Ausgestaltung des Lagers 20 gemäß der Erfindung hat bei asymmetrischer Krafteinwirkung einen besonderen Vorteil dahingehend, dass die Führung, welche der jeweilige Zapfen in seinem Lager 20 während des Verschiebens oder Verschwenkens erfährt, auch in der Lage ist, bis zu einem gewissen Ausmaß das Auftreten von Querkräften in der hier in Betracht kommenden Größenordnung zu kompensieren.

### Bezugszeichenliste

- 10: Bauteil, Kühler
- 12: Halteelement
- 14: Querträger
- 16: Auskragung
- 18: Zapfenartiger Vorsprung
- 20: Lager
- 22: Erster Lagerbereich (Sitz)
- 24: Zweiter Lagerbereich (Verlängerung des Sitzes)
- 26: Langloch
- 28: Sitzwandung
- 30: Schlitz
- 32: Endabschnitt
- 34: Untere Begrenzungsfläche
- 36/38: Seitliche Begrenzungswand
- 40: Halbkreisförmiger Wandabschnitt
- 42/44: Lamellenartiger Vorsprung
- 45: Aufnahme
- 46: Durchgang
- 47: Rand
- 49: Hinterschneidung
- 52: Verstärkungseinlage
- 54: Freiraum
- 56: Abdeckung
- 58: Abgewinkelter Fortsatz
- 59: Freier Schenkel von 58
- 60: Nutförmige Ausnehmung
- 61: Stirnseitiger Rand von 56
- 62: Rechtwinkliger Vorsprung
- 64: Freier Schenkel von 62
- 66: Abschnitt von 14

## Patentansprüche

1. Wenigstens teilweise aus elastischem Material bestehendes Lager (20) für ein Bauteil eines Kraftfahrzeugs, wobei das Bauteil mittels des Lagers so lagerbar ist, dass es im Falle einer bestimmten Kraftbeaufschlagung in Richtung der Krafteinwirkung bewegbar ist, und das Lager (20) einen Sitz (22) aufweist, in welchem bei in der Einbaulage befindlichem Bauteil ein mit diesem verbundenes Halteelement (18) aufnehmbar ist, und die Wandung (28) des Sitzes (22) in dem Bereich, der durch die bei Krafteinwirkung erfolgende Bewegung des Bauteils beaufschlagt wird, mit einer Soll-Durchbruchstelle und der Sitz (22) an der die Soll-Durchbruchstelle aufweisenden Seite mit einer Verlängerung (24) versehen ist, die eine Ausnehmung (26) aufweist, welche als ein sich in Richtung der Kraftwirkung erstreckendes Langloch ausgebildet ist, wobei einander gegenüberliegende Bereiche der Begrenzungswandungen (36) der Ausnehmung (26) einen Abstand voneinander aufweisen, der kleiner ist als die entsprechende Abmessung des von dem Sitz (22) aufnehmbaren Halteelementes (18) des Bauteils, und Bereiche beider Begrenzungswandungen elastisch verformbar sind, **dadurch gekennzeichnet, dass** einander gegenüberliegende Wandbereiche (36, 38) der Ausnehmung (26) wenigstens teilweise von lamellenartigen Vorsprüngen (42, 44) gebildet sind und die lamellenartigen Vorsprünge beider Wandbereiche einander entgegen gerichtet und so bemessen sind, dass der Abstand der freien Enden zweier zusammen wirkender und einander entgegen gerichteten Lamellen beider Wandbereiche kleiner ist als die entsprechende Abmessung des Halteelementes (12) des Bauteils (10) und dass die Lamellen (42, 44) beider Wandbereiche (36, 38) in Längsrichtung des Langloches (26) gegeneinander versetzt angeordnet sind.

2. Lager nach Anspruch 1, **dadurch gekennzeichnet, dass** die Lamellen (42, 44) jedes Wandbereiches in Längsrichtung der Verlängerung (24) einen Abstand voneinander aufweisen.

3. Lager nach Anspruch 1, **dadurch gekennzeichnet, dass** Sitz und/oder Verlängerung (22, 24) des Lagers (20) mit wenigstens einer verstärkenden Einlage (52) versehen sind, welche eine geringere Elastizität aufweist, als der Sitz und/oder die Verlängerung (22, 24).

4. Lager nach Anspruch 1, **dadurch gekennzeichnet, dass** das vom Sitz aufzunehmende Halteelement (18) als Stift oder Zapfen ausgebildet ist.

5. Lager nach einem der vorhergehenden Ansprüchen, **dadurch gekennzeichnet, dass** es mit einer den das Langloch (26) aufweisenden Bereich (24) oberseitig abdeckenden Abdeckung (56) versehen ist, die derart angebracht ist, dass sie eine Bewegung des Halteelementes (18) und damit des Bauteils (10) nicht behindert.

6. Lager nach Anspruch 5, **dadurch gekennzeichnet, dass** die Abdeckung (56) mit wenigstens einem seitlichen Haltefortsatz (58) versehen ist, der in eine am Lager (10) angebrachte Ausnehmung (60) eingreift und Haltefortsatz sowie Ausnehmung parallel zur Längsachse des Langlochs (26) verlaufen.

7. Lager nach Anspruch 6, **dadurch gekennzeichnet, dass** die Abdeckung (56) aus Kunststoff besteht.

8. Baugruppe mit mindestens einem Lager nach einem der vorhergehenden Ansprüche 1 - 7 zur Lagerung eines mit wenigstens einem Halteelement versehenen Bauteils eines Kraftfahrzeugs, **dadurch gekennzeichnet, dass** das in den Sitz (22) des Lagers (20) einsetzbare Halteelement im unteren und/oder oberen Bereich des Bauteils (10) angeordnet ist.

9. Baugruppe nach Anspruch 8, **dadurch gekennzeichnet, dass** die Baugruppe ein Karosserieteil (14) umfasst, mit welchem das Lager (20) verbunden ist, wobei das Karosserieteil mit wenigstens einer Aufnahme (45) für das Lager versehen ist, welches außenseitig eine Hinterschneidung (49) aufweist, in welche in der Einbaulage der Teile Randbereiche (47) der Aufnahme eingreifen.

10. Baugruppe nach Anspruch 9, **dadurch gekennzeichnet, dass** das Karosserieteil (14) als Querträger ausgebildet ist.

11. Baugruppe nach einem der vorhergehenden Ansprüche 8 - 10, **dadurch gekennzeichnet, dass** das Halteelement als Stift oder Zapfen (18) ausgebildet ist.

12. Baugruppe mit einem Lager nach einem der vorherigen Ansprüche 1 - 7, **dadurch gekennzeichnet, dass** das Bauteil als Kühler (10) eines Kraftfahrzeuges ausgebildet ist.

13. Kraftfahrzeug mit mindestens einem Lager (20) nach wenigstens einem der vorherigen Ansprüche 1 bis 7 zur Befestigung eines Bauteils (10) an der Karosserie eines Kraftfahrzeuges.

## Claims

1. Bearing (20) at least partially made of an elastic material for a component of a vehicle, wherein the component can be positioned by means of the bearing so that it is movable, in case of a specified application of force, in the direction of the force applied, and the bearing (20) has a seat (22) in which, when the component is in the mounting position, a retaining element (18) connected therewith can be received and the wall (28) of the seat (22) is provided with a predetermined breaking point in the area that is impacted by the movement of the component that takes place if force is applied and the seat (22) is provided on the side with the predetermined breaking point with an extension (24) that is configured as an oblong hole extending in direction of the force applied, wherein opposed areas of the limiting walls (36) of the recess (26) have a distance from each other that is smaller than the corresponding dimension of the retaining element (18) that can be received by the seat (22) and areas of both limiting walls are elastically deformable, **characterized in that** opposed wall areas (36, 38) of the recess (26) are formed at least partially by lamellar projections (42, 44) and the lamellar projections of both wall areas are oriented opposed and are dimensioned in such a manner that the distance of the free ends of two cooperating and opposed lamellae of both wall areas is smaller than the corresponding dimension of the retaining element (12) of the component (10) and that the lamellae (42, 44) of both wall areas (36, 38) are placed offset to each other in the longitudinal direction of the oblong hole (26).

2. Bearing according to claim 1, **characterized in that** the lamellae (42, 44) of each wall area have a distance from each other in the longitudinal direction of the extension (24).

3. Bearing according to claim 1, **characterized in that** the seat and/or the extension (22, 24) of the bearing (20) are provided with at least one reinforcing insert (52) that has a lower elasticity than the seat and/or the extension (22, 24).

4. Bearing according to claim 1, **characterized in that** the retaining element (18) that has to be received by the seat is configured as a pin or as a trunnion.

5. Bearing according to one of the preceding claims, **characterized in that** it is provided with a cover (56) that coverts the area (24) with the oblong hole (26) on its upper side, this cover being fixed in such a manner that it does not hinter a movement of the retaining element (18) and thus of the component (10).

6. Bearing according to claim 5, **characterized in that** the cover (56) is provided with at least one lateral retaining appendix (58) that engages into a recess (60) arranged on the bearing (10), and the retaining appendix and the recess extend parallel to the longitudinal axis of the oblong hole (26).

7. Bearing according to claim 6, **characterized in that** the cover (56) is made of plastic.

8. Assembly with at least one bearing according to one of the preceding claims 1 to 7 for positioning a component of a motor vehicle provided with at least one retaining element, **characterized in that** the retaining element that can be placed into the seat (22) of the bearing (20) is placed in the lower and/or upper area of the component (10).

9. Assembly according to claim 8, **characterized in that** the assembly comprises a body part (14) with which the bearing (20) is connected, wherein the body part is provided with at least one receptacle (45) for the bearing, that has an undercut (49) on the outer side into which border areas (47) of the receptacle engage, when mounted.

10. Assembly according to claim 9, **characterized in that** the body part (14) is configured as a cross member.

11. Assembly according to one of the preceding claims 8 to 10, **characterized in that** the retaining element is configured as a pin or as a trunnion (18).

12. Assembly with a bearing according to one of the preceding claims 1 to 7, **characterized in that** the component is configured as a cooler (10) of a motor vehicle.

13. Motor vehicle with at least one bearing (20) according to at least one of the preceding claims 1 to 7 for fixing a component (10) to the body of a motor vehicle.

## Revendications

1. Coussinet (20) fabriqué au moins partiellement en un matériau élastique pour un composant d'un véhicule à moteur, le composant pouvant être positionné au moyen du coussinet de manière à pouvoir être déplacé, dans le cas d'une sollicitation de force déterminée, dans le sens de l'application de la force et le coussinet (20) présentant un siège (22) dans lequel, lorsque le composant de trouve en position de montage, un élément de retenue (18) relié à celui-ci peut être logé et la paroi (28) du siège (22) étant pourvue d'un point de rupture dans la zone qui est sollicitée par le mouvement du composant qui est effectué lors de l'application de la force et le siège (22) étant pourvu, sur le côté qui présente le point de rupture, d'un prolongement (24) qui présente un évidement (26) qui est configuré comme un trou oblong qui s'étend en direction de l'action de la force, cependant que des zones opposées l'une à l'autre des parois de délimitation (36) de l'évidement (26) présentent une distance l'une par rapport à l'autre qui est inférieure à la dimension correspondante de l'élément de retenue (18) du composant qui peut être reçu par le siège (22) et que des zones des deux parois de délimitation sont déformables élastiquement, **caractérisé en ce que** des zones de paroi opposées l'une à l'autre (36, 38) de l'évidement (26) sont formées au moins partiellement par des saillies de type lamelles (42, 44) et les saillies de type lamelle des deux zones de paroi sont orientées opposées l'une à l'autre et sont dimensionnées telles que la distance des extrémités libres de deux lamelles coopérant et orientées de manière opposée des deux zones de paroi est inférieure à la dimension correspondante de l'élément de retenue (12) du composant (10) et que les lamelles des deux zones de paroi (36, 38) sont placées décalées l'une par rapport à l'autre dans le sens longitudinal du trou oblong (26).

2. Coussinet selon la revendication 1, **caractérisé en ce que** les lamelles (42, 44) de chaque zone de paroi présentent un écart l'une par rapport à l'autre dans le sens longitudinal du prolongement (24).

3. Coussinet selon la revendication 1, **caractérisé en ce que** le siège et/ou le prolongement (22, 24) du coussinet (20) sont pourvus d'au moins un insert de renfort (52) qui présente une élasticité inférieure à celle du siège et/ou du prolongement (22, 24).

4. Coussinet selon la revendication 1, **caractérisé en ce que** l'élément de retenue (18) qui doit être logé par le siège est configuré comme une goupille ou un tenon.

5. Coussinet selon l'une des revendications précédentes, **caractérisé en ce qu'**il est pourvu d'un recouvrement (56) qui recouvre la zone (24) qui présente le trou oblong (26) sur le dessus, recouvrement qui est fixé de telle manière qu'il ne gêne pas un mouvement de l'élément de retenue (18) et donc du composant (10).

6. Coussinet selon la revendication 5, **caractérisé en ce que** le recouvrement (56) est pourvu d'au moins un appendice latéral de retenue (58) qui est en prise dans un évidement (60) ménagé sur le coussinet (10) et que l'appendice de retenue et l'évidement sont parallèles à l'axe longitudinal du trou oblong (26).

7. Coussinet selon la revendication 6, **caractérisé en ce que** le recouvrement (56) est en plastique.

8. Assemblage avec au moins un coussinet selon l'une des revendications précédentes 1 à 7 pour le positionnement d'un composant pourvu d'au moins un élément de retenue d'un véhicule, **caractérisé en ce que** l'élément de retenue qui peut être mis en place dans le siège (22) du coussinet (20) est placé dans la zone inférieure et/ou supérieure du composant (10).

9. Assemblage selon la revendication 8, **caractérisé en ce que** l'assemblage comprend une partie de carrosserie (14) à laquelle le coussinet (20) est relié cependant que la partie de carrosserie est pourvue d'au moins un logement (45) pour le coussinet qui présente, sur le côté extérieur, une contre-dépouille (49) dans laquelle, lorsque les pièces sont en position de montage, des parties marginales (47) du logement sont en prise.

10. Assemblage selon la revendication 9, **caractérisé en ce que** la partie de carrosserie (14) est configurée comme un support transversal.

11. Assemblage selon l'une des revendications précédentes 8 à 10, **caractérisé en ce que** l'élément de retenue est configuré comme une goupille ou un tenon (18).

12. Assemblage avec un coussinet selon l'une des revendications précédentes 1 à 7, **caractérisé en ce que** le composant est configuré comme un radiateur (10) de véhicule à moteur.

13. Véhicule à moteur avec au moins un coussinet (20) selon l'une des revendications précédentes 1 à 7 pour la fixation d'un composant (10) à la carrosserie d'un véhicule à moteur.
